# EUROPÄISCHE PATENTSCHRIFT

(11) **EP 3 448 729 B1**
(45) Veröffentlichungstag und Bekanntmachung des Hinweises auf die Patenterteilung: **01.07.2020**
(21) Anmeldenummer: 17730053.0
(22) Anmeldetag: 06.03.2017
(51) Int. Cl.: B60T 8/18

(54) **VORRICHTUNG ZUR ELEKTRONISCHEN ERFASSUNG DER ACHSLAST EINES KRAFTFAHRZEUGS**
DEVICE FOR ELECTRONIC SENSING OF THE AXLE LOAD OF A MOTOR VEHICLE
DISPOSITIF DE DÉTECTION ÉLECTRONIQUE DE LA CHARGE PAR ESSIEU D'UN VÉHICULE AUTOMOBILE

(30) Priorität: 30.04.2016 DE 102016005666
(43) Veröffentlichungstag der Anmeldung: 06.03.2019
(73) Patentinhaber: WABCO Europe BVBA, 1170 Brussels (BE)
(72) Erfinder: BINDSEIL, Olaf, 30167 Hannover (DE); COUPPEE, Ulrich, 31863 Coppenbruegge (DE); FABIAN, Alexander, 31224 Peine (DE)
(74) Vertreter: Rabe, Dirk-Heinrich
(86) Internationale Anmeldenummer: PCT/EP2017/000301
(87) Internationale Veröffentlichungsnummer: WO 2017/186323

(56) Entgegenhaltungen:
- EP-A1- 0 814 321
- DE-A1- 19 641 028
- FR-A1- 2 924 662
- US-A- 4 597 610
- US-A- 5 099 221

## Beschreibung

Die Erfindung betrifft ein lastabhängiges Bremsventil, welches zur Ausgabe eines von einer Achslast eines Fahrzeugs abhängigen Bremsdrucks ausgebildet ist.

Besonders bei Nutzfahrzeugen sind die zulässigen Achslasten der Fahrzeugachsen entscheidende Größen zur Überprüfung des zulässigen Gesamtgewichts der Kraftfahrzeuge sowie zur Begrenzung der Belastung von Fahrbahnen und Brücken durch die Kraftfahrzeuge. Mit der EU-Richtlinie 2015/719 werden die Mitgliedsstaaten der EU im Wesentlichen zur Vermeidung von Wettbewerbsverzerrungen aufgefordert, bis zum 27.05.2021 Maßnahmen zur weitgehend automatisierten Erfassung von Überschreitungen des zulässigen Gesamtgewichts von Nutzfahrzeugen zu treffen. Hierzu können in die Straßeninfrastruktur integrierte Wiegevorrichtungen oder in den Fahrzeugen angeordnete Messgeräte vorgesehen werden. Im Fall der bordeigenen Messgeräte, mit denen zum Beispiel die aktuellen Achslasten der Fahrzeugachsen erfasst werden können, sollen die betreffenden Daten auch dem Fahrer zur Verfügung gestellt werden, also beispielsweise in einem im Sichtbereich des Fahrers angeordneten Display angezeigt werden. Somit kann es zukünftig erforderlich sein, die Achslasten der Fahrzeugachsen eines Nutzfahrzeugs elektronisch zu erfassen, um sie einerseits dem Fahrer anzeigen zu können und andererseits etwa per Transponder an Kontrollstellen übermitteln zu können.

Bei luftgefederten Nutzfahrzeugen kann die Erfassung der Achslasten über Drucksensoren erfolgen, die an die Federbälge der Luftfedern angeschlossen oder an diesen angeordnet sind. Bei einer bekannten elektronisch gesteuerten Luftfederung (ECAS) der Firma WABCO Europe BVBA werden die über Drucksensoren erfassten Balgdrücke der Luftfedern in einen CAN-Bus eingespeist und stehen somit im gesamten Kraftfahrzeug zur Ermittlung und Anzeige der Achslasten zur Verfügung. Entsprechende Informationen sind zum Beispiel der WABCO-Druckschrift 815 020 027 3 "ECAS im Motorwagen" zu entnehmen, die von der Website www.wabco-auto.com der WABCO Europe BVBA als pdf-Dokument heruntergeladen werden kann. Eine weitere Vorrichtung und ein Verfahren zur Bestimmung der Achslast eines Fahrzeugs, bei denen die Signale von in den Federbälgen der Luftfedern angeordneten Drucksensoren erfasst und ausgewertet werden, sind in der DE 198 57 513 B4 beschrieben.

US4597610A betrifft einen lastabhängigen Bremskraftregler für Kraftfahrzeug-Bremsanlagen, mit einem den Bremsdruckmittel-Durchgang überwachenden Regelventil.

FR2924662A1 betrifft ein Schienenfahrzeug, das mit einem autovariablen Bremssystem ausgestattet ist. Das Schienenfahrzeug umfasst im Allgemeinen eine Achse, auf der ein Wiegeregler installiert ist.

Aus der DE 10 2004 019 624 B3 ist eine Vorrichtung zur elektronischen Erfassung der Achslast eines Kraftfahrzeugs bekannt, die auch bei stahlgefederten Kraftfahrzeugen zur Anwendung kommen kann. Bei den Sensoren, deren Signale zur Bestimmung der Achslasten erfasst und ausgewertet werden, kann es sich um an den mechanischen Federelementen der Fahrzeugachsen angeordnete Dehnmessstreifen oder um in den Reifen der an den Fahrzeugachsen montierten Räder angeordnete Reifendrucksensoren handeln.

Da die genannten Sensoren aufgrund ihrer Bauweise relativ störungsanfällig sind und wegen ihrer Anordnung leicht beschädigt werden können, liegt der hier in Rede stehenden Erfindung die Aufgabe zugrunde, den Einfederungsweg einer Fahrzeugachse gegenüber einem Fahrzeugrahmen mittels eines sicher ausgebildeten sowie sicher angeordneten Sensors zu erfassen und in ein elektronisches Messsignal umzuwandeln.

Die Lösung dieser Aufgabe wird durch ein lastabhängiges Bremsventil mit den Merkmalen des Anspruchs 1 erreicht. Vorteilhafte Weiterbildungen sind in den abhängigen Ansprüchen definiert.

Demnach weist das lastabhängige Bremsventil einen Sensor zur elektronischen Erfassung einer Achslast des Fahrzeugs auf.

Da der Sensor in oder an das lastabhängige Bremsventil integriert ist, ist eine vorteilhafte Kombination zweier Vorrichtungen erreicht und der Sensor ist sicher angeordnet. Weil der Sensor vorzugsweise innerhalb eines Bremsventilgehäuses angeordnet ist und selbst verschleißfrei sowie sehr genau arbeitet, kann der Einfederungsweg der Fahrzeugachse in Bezug zum Fahrzeugrahmen problemlos und exakt bestimmt werden.
Der Sensor ist bevorzugt als ein induktiv arbeitender Sensor ausgebildet.

Gemäß einer ersten Ausführungsform des Sensors ist dieser als induktiver Drehwinkelsensor ausgebildet ist, mittels welchem der Einfederungsweg einer Fahrzeugachse gegenüber einem Fahrzeugrahmen mechanisch erfassbar und in ein elektronisches Messsignal umwandelbar ist. Der Drehwinkelsensor besteht aus einer in einem Gehäuse des Bremsventils angeordneten Spule und einem Drehanker, wobei der Drehanker aus einem weichmagnetischen Material besteht. Ferner ist vorgesehen, dass der Drehanker drehbar sowie koaxial über einer Längsachse des Gehäuses angeordnet ist, und dass eine mit dem Drehanker des Drehwinkelsensors verbundene Steuerwelle über ein Gelenkgestänge mit der Fahrzeugachse in Verbindung steht.

In einer ersten Ausführungsform ist es auch vorgesehen, dass der Drehwinkelsensor achsparallel und horizontal beabstandet zu der Fahrzeugachse an dem Fahrzeugrahmen des Fahrzeugs befestigt ist.

Über das Gelenkgestänge, das vorzugsweise aus zwei gelenkig miteinander verbundenen Stangen besteht, von denen die eine weitgehend radial an der Fahrzeugachse und die andere radial an der Steuerwelle des Drehwinkelsensors befestigt ist, wird der lastabhängig variable Einfederungsweg der Fahrzeugachse gegenüber dem Fahrzeugrahmen in eine Drehung der Steuerwelle des Drehwinkelsensors umgesetzt. Die entsprechende Verdrehung des Drehankers in Bezug zur Spule des Drehwinkelsensors bewirkt eine Änderung der Induktivität der Spule, die mittels einer geeigneten elektronischen Schaltung erfasst und ausgewertet werden kann.

Aufgrund der Ausbildung und Anordnung des induktiven Drehwinkelsensors, dessen prinzipieller Aufbau aus der DE 197 07 122 A1 bekannt ist, kann die Achslast der jeweiligen Fahrzeugachse mit der erfindungsgemäßen Vorrichtung zur elektronischen Ermittlung der Achslast eines Kraftfahrzeugs zuverlässig erfasst und dem Fahrer in einem Display angezeigt sowie mittels einem Transponder an Kontrollstellen an externe Anzeigegeräte übermittelt werden.

Gemäß einer anderen Weiterbildung kann vorgesehen sein, dass der Drehwinkelsensor in einem Gehäuse des Bremsventils zusammen mit der dort drehbar gelagerten Steuerwelle integriert ist, dass das Bremsventil bezüglich der Steuerwelle achsparallel und horizontal beabstandet zu der Fahrzeugachse an dem Fahrzeugrahmen des Fahrzeugs befestigt ist, dass die Steuerwelle über ein Gelenkgestänge mit der Fahrzeugachse in Verbindung steht, dass die Spule des Drehwinkelsensors koaxial über der Steuerwelle in dem Gehäuse des Bremsventils angeordnet ist, und dass der Drehanker des Drehwinkelsensors auf der Steuerwelle befestigt ist.

Durch seine Anordnung innerhalb des Bremsventils ist der Drehwinkelsensor besonders gut gegen eine Beschädigung geschützt und entsprechend funktionssicher. Zudem wird dadurch ein zusätzlicher Montageaufwand vermieden. Der Aufbau und die Funktion eines derartigen mechanisch lastabhängig steuerbaren Bremsventils sind in der
DE 196 41 028 A1 beschrieben.

Gemäß einer zu einem Drehwinkelsensor alternativen zweiten Ausführungsform kann vorgesehen sein, dass der Sensor als induktiver Wegsensor ausgebildet ist, mittels welchem der Einfederungsweg einer Fahrzeugachse gegenüber einem Fahrzeugrahmen mechanisch erfassbar und in ein elektronisches Messsignal umwandelbar ist, dass der Wegsensor aus einer in einem Gehäuse des Bremsventils angeordneten Spule und einem Tauchanker besteht, dass der Tauchanker aus einem weichmagnetischen Material besteht, dass der Tauchanker axial verschiebbar sowie koaxial über einer Längsachse des Gehäuses angeordnet ist, und dass eine mit dem Tauchanker des Wegsensors über eine Kulissenführung verbundene, drehbar in dem Gehäuse gelagerten Steuerwelle über ein Gelenkgestänge mit der Fahrzeugachse in Verbindung steht.

In einer zweiten Ausführungsform ist es auch vorgesehen, dass der Wegsensor achsparallel und horizontal beabstandet zu der Fahrzeugachse an dem Fahrzeugrahmen des Kraftfahrzeugs befestigt ist.

Über das Gelenkgestänge, das vorzugsweise aus zwei gelenkig miteinander verbundenen Stangen besteht, von denen die eine weitgehend radial an der Fahrzeugachse und die andere radial an der Steuerwelle des Wegsensors befestigt ist, wird der lastabhängig variable Einfederungsweg der Fahrzeugachse in Bezug zum Fahrzeugrahmen in eine Drehung der Steuerwelle sowie über die Kulissenführung in eine Axialverschiebung des Tauchankers des Wegsensors umgesetzt. Die entsprechende Axialverschiebung des Tauchankers gegenüber der Spule des Wegsensors bewirkt eine Änderung der Induktivität der Spule, die mittels einer geeigneten elektronischen Schaltung erfasst und ausgewertet werden kann.

Aufgrund der Ausbildung und Anordnung des induktiven Wegsensors, dessen prinzipieller Aufbau aus der DE 197 18 150 C2 bekannt ist, kann die Achslast der jeweiligen Fahrzeugachse mit der erfindungsgemäßen Vorrichtung zur elektronischen Erfassung der Achslast eines Kraftfahrzeugs zuverlässig ermittelt und dem Fahrer in einem Display angezeigt sowie mittels einem Transponder an externe Kontrollstellen übermittelt werden.

Schließlich kann vorgesehen sein, dass der induktive Wegsensor in ein Gehäuse des Bremsventils integriert ist, in welchem eine Steuerwelle drehbar gelagert ist, die über eine Kulissenführung mit einer im Gehäuse axial verschiebbaren Steuerstange verbunden ist, dass das Bremsventil bezüglich der Steuerwelle achsparallel und horizontal beabstandet zu der Fahrzeugachse an dem Fahrzeugrahmen des Fahrzeugs befestigt ist, dass das die Steuerwelle über ein Gelenkgestänge mit der Fahrzeugachse in Verbindung steht, dass die Spule des Wegsensors koaxial über der Steuerstange in dem Gehäuse des Bremsventils angeordnet ist, und dass der Tauchanker des Wegsensors auf der Steuerstange befestigt ist.

Durch seine Anordnung innerhalb des Bremsventils ist der Wegsensor besonders gut gegen eine Beschädigung geschützt und entsprechend funktionssicher. Zudem wird dadurch ein zusätzlicher Montageaufwand vermieden. Informationen zum Aufbau und zur Funktion von derartigen mechanisch lastabhängig steuerbaren Bremsventilen sind der DE 196 41 028 A1 entnehmbar.

Die Erfindung wird nachstehend anhand von zwei in der beigefügten Zeichnung dargestellten Ausführungsbeispielen näher erläutert. In der Zeichnung zeigt
Fig. 1 eine Vorrichtung zur elektronischen Erfassung der Achslast eines Kraftfahrzeugs mit einem mechanisch lastabhängig steuerbaren Bremsventils in einer schematischen Seitenansicht,
Fig. 2 eine erste Ausführungsform des lastabhängig steuerbaren Bremsventils gemäß Fig. 1 in einer ausschnittweisen Querschnittsansicht,
Fig. 3 eine zweite Ausführungsform des lastabhängig steuerbaren Bremsventils gemäß Fig. 1 in einer ausschnittweisen Querschnittsansicht, und
Fig. 4 das mechanisch lastabhängig steuerbare Bremsventil gemäß den Figuren 2 und 3 ohne einen erfindungsgemäßen Sensor in einer Querschnittsansicht.

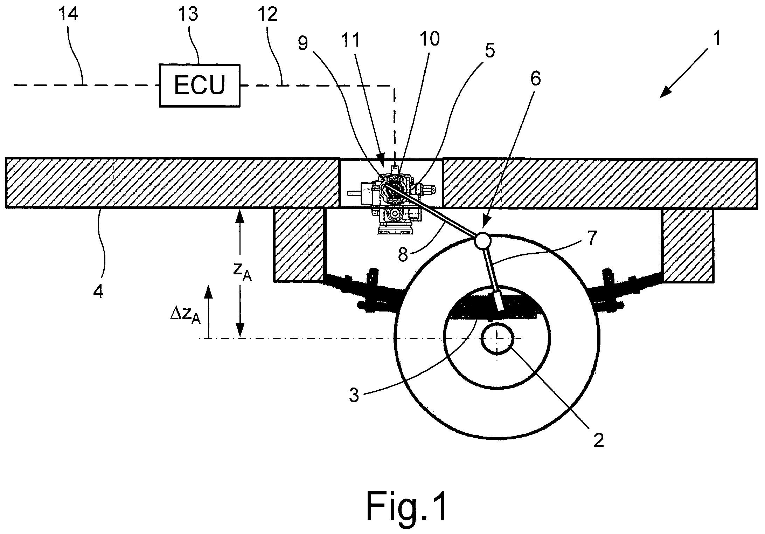

In Fig. 1 ist ein Teil eines Kraftfahrzeugs 1 mit einer Fahrzeugachse 2 in einer schematischen Seitenansicht dargestellt. Anstelle des Kraftfahrzeugs 1 kann es sich bei dem Fahrzeug auch um einen Fahrzeuganhänger handeln. Die Fahrzeugachse 2 ist über zwei seitlich angeordnete Blattfederpakete 3 an einem Fahrzeugrahmen 4 aufgehängt. In der Seitenansicht ist nur ein Blattfederpaket 3 erkennbar. An dem Fahrzeugrahmen 4 ist ein mechanisch lastabhängig steuerbares Bremsventil 5 befestigt, mittels dem der Bremsdruck der nicht abgebildeten Radbremsen der Fahrzeugachse 2 in Abhängigkeit von einem über ein pedalbetätigtes Hauptbremsventil eingesteuerten Hauptbremsdruck sowie von der auf die Fahrzeugachse 2 wirksamen Achslast geregelt wird. Mit zunehmender Achslast federt die Fahrzeugachse 2 weiter ein, so dass sich der vertikale Abstand z_{A} zwischen der Fahrzeugachse 2 und dem Fahrzeugrahmen 4 verringert. Der dabei ausgehend von dem Abstand z_{A} bei unbeladenem Kraftfahrzeug 1 zurückgelegte Einfederungsweg Δz_{A} ist ein Maß für die aktuelle Achslast der Fahrzeugachse 2.

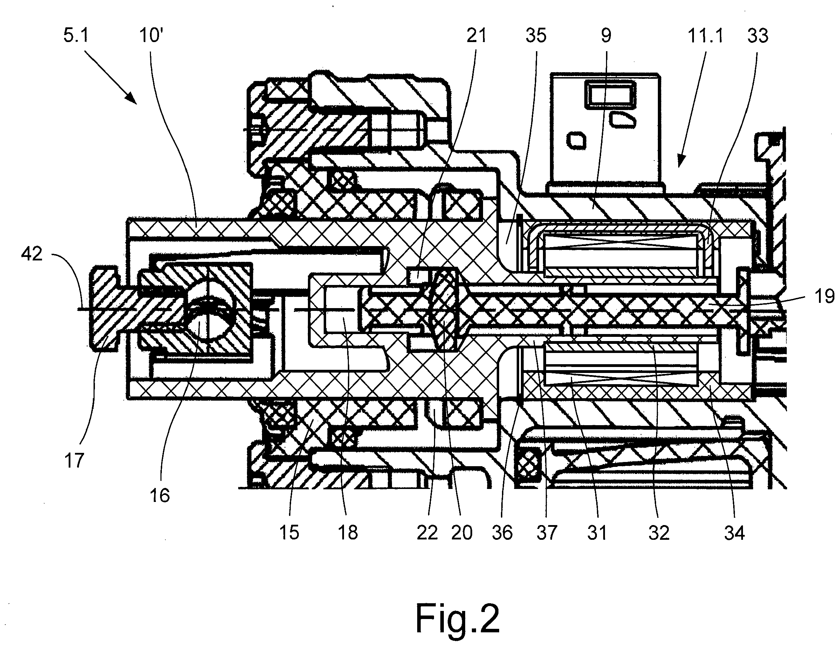

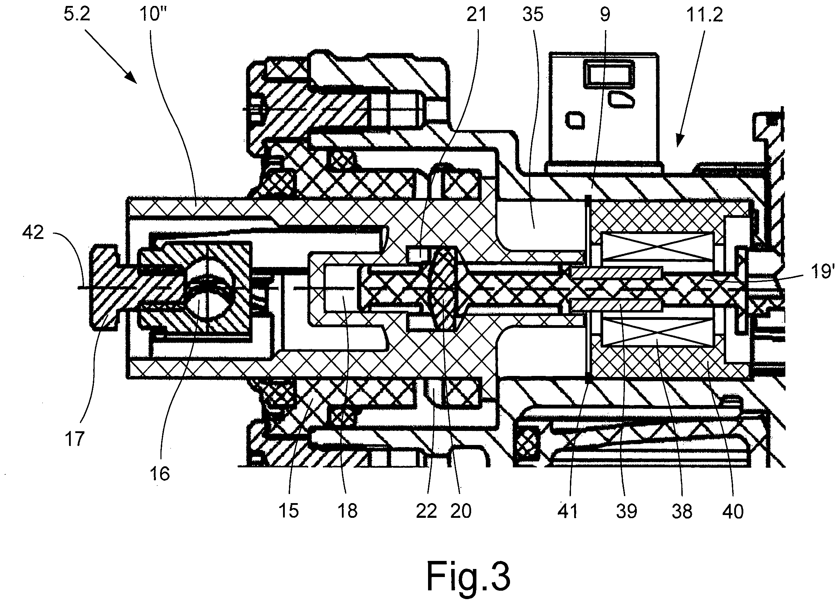

Der Einfederungsweg Δz_{A} der Fahrzeugachse 2 wird über ein Gelenkgestänge 6 auf das Bremsventil 5 übertragen. Das Gelenkgestänge 6 besteht aus zwei gelenkig miteinander verbundenen Stangen 7, 8, von denen eine erste Stange 7 weitgehend radial an der Fahrzeugachse 2 und die zweite Stange 8 radial an einer drehbar in einem Gehäuse 9 des Bremsventils 5 gelagerten Steuerwelle 10 befestigt ist. Die Steuerwelle 10 ist hierbei koaxial über einer Längsachse 42 des Bremsventils 5 angeordnet, welches bei den in den Figuren 2 und 3 dargestellten Bremsventilen 5.1, 5.2 besser erkennbar ist. Erfindungsgemäß ist in dem Gehäuse 9 des Bremsventils 5 auch ein induktiv wirksamer Sensor 11 zur elektronischen Erfassung der Achslast der Fahrzeugachse 2 angeordnet, der mit der Steuerwelle 10 des Bremsventils 5 in Wirkverbindung steht. Der Sensor 11 steht über eine Sensorleitung 12 mit einer elektronischen Steuereinheit 13 (ECU) in Verbindung, in der die Sensorsignale des Sensors 11 ausgewertet und die so ermittelte Achslast der Fahrzeugachse 2 über mindestens eine Datenleitung 14 an ein Display zur Anzeige für den Fahrer und/oder an einen Transponder zur Übermittlung an Kontrollstellen weitergeleitet wird.

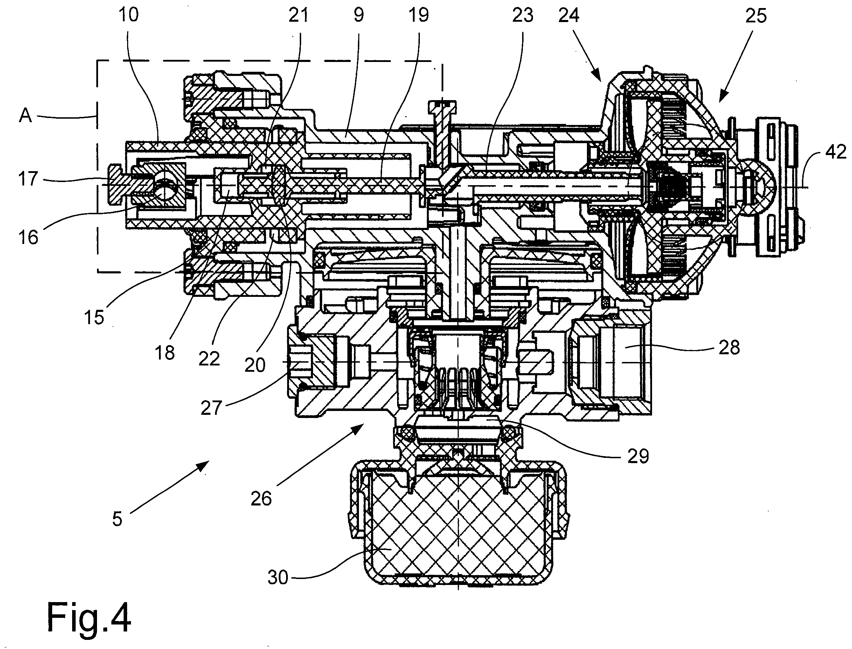

Zwei unterschiedliche Ausführungen des induktiven Sensors 11, 11.1, 11.2 werden nachfolgend anhand von ausschnittweisen Querschnittansichten des Bremsventils 5.1, 5.2 näher erläutert, die in den Figuren 2 und 3 abgebildet sind. Der betreffende Ausschnitt eines nicht mit einem Sensor 11 ausgerüsteten Bremsventils 5 ist in der in Fig. 4 abgebildeten Querschnittsansicht mit dem mit dem Bezugszeichen A bezeichneten Rahmen markiert. Da der Aufbau und die Wirkungsweise des Bremsventils 5 in der DE 196 41 028 A1 und in der WABCO-Druckschrift Nr. 815 020 057 3-14 "Grundlehrgang 14 Last/Leerventile und mechanisch gesteuerte ALB-Ventile" jeweils ausführlich beschrieben sind, ist die vorliegende Beschreibung des Bremsventils 5 auf die für die Erfindung wesentlichen Bauteile beschränkt. Diese Druckschrift Nr. 815 020 057 3-14 kann von der Website www.wabco-auto.com der WABCO Europe BVBA als pdf-Dokument aus dem Internet heruntergeladen werden kann.

In dem Gehäuse 9 des in Fig. 4 dargestellten Bremsventils 5 ist die Steuerwelle 10 in einem Gehäusedeckel 15 drehbar gelagert und axial fixiert. Axial außen weist die Steuerwelle 10 eine Bohrung 16 zur Aufnahme eines axialen Endes der zugeordneten zweiten Stange 8 des Gelenkgestänges 6 auf, in welcher die zweite Stange 8 bei der Montage mittels einer Klemmschraube 17 fixiert wird. Radial innen weist die Steuerwelle 10 eine Zentralbohrung 18 auf, in der eine Steuerstange 19 axialbeweglich geführt ist.
Mittels eines radialen Führungsstifts 20 ist die Steuerstange 19 drehfest in Ausnehmungen 21 der Steuerwelle 10 sowie axial verschiebbar in Kulissenbahnen 22 eines Gehäusedeckels 15 geführt. Somit wird eine Drehung der Steuerwelle 10 in eine Axialverschiebung der Steuerstange 19 umgesetzt.

Die Steuerstange 19 steht axial innen mit einer axial verschiebbar gelagerten hohlen Stößelstange 23 in Verbindung. Über die Stößelstange 23 wird ein Bremsdruckregelventil 24 des Bremsventils 5 mechanisch angesteuert, das außerhalb der Zeichenebene von Fig. 4 einen Anschluss 25 für einen über ein pedalbetätigtes Hauptbremsventil eingesteuerten Hauptbremsdruck aufweist. Über das Bremsdruckregelventil 24 wird ein Relaisventil 26 pneumatisch angesteuert, das einen Anschluss 27 für einen Vorratsdruck, einen Anschluss 28 für einen Radbremsdruck, und einen mit einem Schalldämpfer 30 versehenen Entlüftungsausgang 29 aufweist. Mittels des Bremsventils 5 wird der Radbremsdruck der an den Anschluss 28 angeschlossenen Radbremsen der Fahrzeugachse 2 abhängig von dem über das Hauptbremsventil eingesteuerten und an dem Anschluss 25 anliegenden Hauptbremsdruck sowie abhängig von der über das Gelenkgestänge 6 und die Steuerwelle 10 mechanisch eingesteuerten Achslast der Fahrzeugachse 2 moduliert.

In der in Fig. 2 abgebildeten ersten Ausführungsform des Sensors 11.1 ist dieser als ein induktiver Drehwinkelsensor ausgebildet und in ein mechanisch lastabhängig steuerbares Bremsventil 5.1 integriert. Der Drehwinkelsensor 11.1 weist eine gehäusefest angeordnete Spule 31 und einen aus einem weichmagnetischen Material bestehenden, um eine Längsachse 42 des Bremsventils 5.1 koaxial angeordneten sowie drehbaren Drehanker 32 auf. Die Spule 31 des Drehwinkelsensors 11.1 ist zusammen mit einem asymmetrisch ausgebildeten, aus einem weichmagnetischen Material bestehenden Magnetkörper 33 in einen zum Beispiel aus Kunststoff bestehenden rohrförmigen Trägerkörper 34 eingelassen.

Der Trägerkörper 34 ist drehfest in einen zylindrischen Innenraum 35 des Gehäuses 9 eingesetzt und mittels eines in eine Ringnut eingesetzten Sicherungsrings 36 axial fixiert. Die Spule 31 des Drehwinkelsensors 11.1 ist dadurch koaxial über einem rohrförmigen Abschnitt 37 der Steuerwelle 10' angeordnet. Der asymmetrisch ausgebildete und aus einem weichmagnetischen Material bestehende Drehanker 32 des Drehwinkelsensors 11.1 ist drehfest und axial unverschiebbar auf dem rohrförmigen Abschnitt 37 der Steuerwelle 10' angeordnet.

Die mit der lastabhängigen Drehung der Steuerwelle 10' verbundene Verdrehung des Drehankers 32 gegenüber der Spule 31 des Drehwinkelsensors 11.1 bewirkt eine Änderung der Induktivität der Spule 31, die in der elektronischen Steuereinheit 13 erfasst und zur Bestimmung der aktuellen Achslast der Fahrzeugachse 2 ausgewertet wird. Durch seine Anordnung innerhalb des Bremsventils 5.1 ist der Drehwinkelsensor 11.1 besonders gut gegen eine Beschädigung geschützt und entsprechend funktionssicher. Zudem wird dadurch gegenüber einer separaten Sensoranordnung der Montageaufwand reduziert.

In der in Fig. 3 abgebildeten zweiten Ausführungsform des Sensors 11.2 ist dieser als ein induktiver Wegsensor ausgebildet und in ein mechanisch lastabhängig steuerbares Bremsventil 5.2 integriert. Der Wegsensor 11.2 weist eine gehäusefest angeordnete Spule 38 und einen aus einem weichmagnetischen Material bestehenden, axial verschiebbaren Tauchanker 39 auf. Die Spule 38 des Wegsensors 11.2 ist in einen zum Beispiel aus Kunststoff bestehenden rohrförmigen Trägerkörper 40 eingelassen. Der Trägerkörper 40 ist drehfest in den zylindrischen Innenraum 35 des Gehäuses 9 eingesetzt und mittels eines in eine Ringnut eingesetzten Sicherungsrings 41 axial fixiert. Die Spule 38 des Wegsensors 11.2 ist dadurch koaxial über der Steuerstange 19' angeordnet. Der aus einem weichmagnetischen Material bestehende Tauchanker 39 des Wegsensors 11.2 ist axial versetzt zu der Spule 38 drehfest und axial unverschiebbar auf der Steuerstange 19' angeordnet.

Die mit der lastabhängigen Drehung der Steuerwelle 10" und Axialverschiebung der Steuerstange 19' verbundene Axialverschiebung des Tauchankers 39 gegenüber der Spule 38 des Wegsensors 11.2 bewirkt eine Änderung der Induktivität der Spule 38, die in der elektronischen Steuereinheit 13 erfasst und zur Bestimmung der aktuellen Achslast der Fahrzeugachse 2 ausgewertet wird. Durch seine Anordnung innerhalb des Bremsventils 5.2 ist der Wegsensor 11.2 besonders gut gegen eine Beschädigung geschützt und entsprechend funktionssicher. Zudem wird dadurch gegenüber einer separaten Sensoranordnung der Montageaufwand reduziert.

## Patentansprüche

1. Fahrzeug mit einem Fahrzeugrahmen und einer daran befestigten Fahrzeugachse und mit einem lastabhängigen Bremsventil (5.1), welches zur Ausgabe eines von einer Achslast eines Fahrzeugs (1) abhängigen Bremsdrucks ausgebildet ist, wobei dieses Bremsventil (5.1) einen Sensor (11.1) zur elektronischen Erfassung einer Achslast des Fahrzeugs (1) aufweist, wobei der Sensor (11.1) als induktiv arbeitender Sensor ausgebildet ist, wobei der Sensor (11.1) als induktiver Drehwinkelsensor (11.1) ausgebildet ist, mittels welchem der Einfederungsweg (Δz_{A}) einer Fahrzeugachse (2) gegenüber einem Fahrzeugrahmen (4) mechanisch erfassbar und in ein elektronisches Messsignal umwandelbar ist, wobei der Drehwinkelsensor (11.1) aus einer in einem Gehäuse (9) des Bremsventils (5.1) angeordneten Spule (31) und einem Drehanker (32) besteht, wobei der Drehanker (32) aus einem weichmagnetischen Material besteht, wobei der Drehanker (32) drehbar sowie koaxial über einer Längsachse (42) des Gehäuses (9) angeordnet ist, und wobei eine mit dem Drehanker (32) des Drehwinkelsensors (11.1) verbundene Steuerwelle (10') über ein Gelenkgestänge (6) mit der Fahrzeugachse (2) in Verbindung steht, wobei der Drehwinkelsensor (11.1) achsparallel und horizontal beabstandet zu der Fahrzeugachse (2) an dem Fahrzeugrahmen (4) des Fahrzeugs (1) befestigt ist.

2. Fahrzeug nach Anspruch 1, **dadurch gekennzeichnet, dass** der Drehwinkelsensor (11.1) in dem Gehäuse (9) des Bremsventils (5.1) zusammen mit der dort drehbar gelagerten Steuerwelle (10') integriert ist, dass das Bremsventil (5.1) bezüglich der Steuerwelle (10') achsparallel und horizontal beabstandet zu der Fahrzeugachse (2) an dem Fahrzeugrahmen (4) des Fahrzeugs (1) befestigt ist, dass die Steuerwelle (10') über die Gelenkgestänge (6) mit der Fahrzeugachse (2) in Verbindung steht, dass die Spule (31) des Drehwinkelsensors (11.1) koaxial über der Steuerwelle (10') in dem Gehäuse (9) des Bremsventils (5.1) angeordnet ist, und dass der Drehanker (32) des Drehwinkelsensors (11.1) auf der Steuerwelle (10') befestigt ist.

3. Fahrzeug mit einem Fahrzeugrahmen und einer daran befestigten Fahrzeugachse und mit einem lastabhängigen Bremsventil (5.2), welches zur Ausgabe eines von einer Achslast eines Fahrzeugs (1) abhängigen Bremsdrucks ausgebildet ist, wobei dieses Bremsventil (5.2) einen Sensor (11.2) zur elektronischen Erfassung einer Achslast des Fahrzeugs (1) aufweist, wobei der Sensor (11.2) als induktiv arbeitender Sensor ausgebildet ist, wobei der Sensor (11) als induktiver Wegsensor (11.2) ausgebildet ist, mittels welchem der Einfederungsweg (Δz_{A}) einer Fahrzeugachse (2) gegenüber einem Fahrzeugrahmen (4) mechanisch erfassbar und in ein elektronisches Messsignal umwandelbar ist, wobei der Wegsensor (11.2) aus einer in einem Gehäuse (9) des Bremsventils (5.2) angeordneten Spule (38) und einem Tauchanker (39) besteht, wobei der Tauchanker (39) aus einem weichmagnetischen Material besteht, wobei der Tauchanker (39) axial verschiebbar sowie koaxial über einer Längsachse (42) des Gehäuses (9) angeordnet ist, und wobei eine mit dem Tauchanker (39) des Wegsensors (11.2) über eine Kulissenführung (20, 21, 22) verbundene, drehbar in dem Gehäuse (9) gelagerten Steuerwelle (10") über ein Gelenkgestänge (6) mit der Fahrzeugachse (2) in Verbindung steht, wobei der Wegsensor (11.2) achsparallel und horizontal beabstandet zu der Fahrzeugachse (2) an dem Fahrzeugrahmen (4) des Kraftfahrzeugs (1) befestigt ist.

4. Fahrzeug nach Anspruch 3, **dadurch gekennzeichnet, dass** der Wegsensor (11.2) in dem Gehäuse (9) des Bremsventils (5.2) integriert ist, in welchem die Steuerwelle (10") drehbar gelagert ist, die über die Kulissenführung (20, 21, 22) mit einer im Gehäuse (9) axial verschiebbaren Steuerstange (19') verbunden ist, dass das Bremsventil (5.2) bezüglich der Steuerwelle (10") achsparallel und horizontal beabstandet zu der Fahrzeugachse (2) an dem Fahrzeugrahmen (4) des Fahrzeugs (1) befestigt ist, dass das die Steuerwelle (10") über die Gelenkgestänge (6) mit der Fahrzeugachse (6) in Verbindung steht, dass die Spule (38) des Wegsensors (11.2) koaxial über der Steuerstange (19') in dem Gehäuse (9) des Bremsventils (5.2) angeordnet ist, und dass der Tauchanker (39) des Wegsensors (11.2) auf der Steuerstange (19') befestigt ist.

## Claims

1. Vehicle having a vehicle frame and having a vehicle axle which is fastened thereto and having a load-dependent brake valve (5.1) which is designed to output a brake pressure which is dependent on an axle load of a vehicle (1), wherein said brake valve (5.1) has a sensor (11.1) for electronic detection of an axle load of the vehicle (1), wherein the sensor (11.1) is designed as an inductively operating sensor, wherein the sensor (11.1) is designed as an inductive rotational angle sensor (11.1) by means of which the compression travel (Δz_{A}) of a vehicle axle (2) in relation to a vehicle frame (4) is able to be detected mechanically and is able to be converted into an electronic measurement signal, wherein the rotational angle sensor (11.1) consists of a coil (31), arranged in a housing (9) of the brake valve (5.1), and a rotating armature (32), wherein the rotating armature (32) consists of a soft magnetic material, wherein the rotating armature (32) is arranged so as to be rotatable and coaxial over a longitudinal axis (42) of the housing (9), and wherein a control shaft (10') connected to the rotating armature (32) of the rotational angle sensor (11.1) is connected to the vehicle axle (2) via an articulated linkage (6), wherein the rotational angle sensor (11.1) is fastened to the vehicle frame (4) of the vehicle (1) so as to be axially parallel and horizontally spaced apart with respect to the vehicle axle (2).

2. Vehicle according to Claim 1, **characterized in that** the rotational angle sensor (11.1) is integrated into the housing (9) of the brake valve (5.1) together with the control shaft (10') mounted rotatably there, **in that** the brake valve (5.1), with respect to the control shaft (10'), is fastened to the vehicle frame (4) of the vehicle (1) so as to be axially parallel and horizontally spaced apart with respect to the vehicle axle (2), **in that** the control shaft (10') is connected to the vehicle axle (2) via the articulated linkage (6), **in that** coil (31) of the rotational angle sensor (11.1) is arranged so as to be coaxial over the control shaft (10') in the housing (9) of the brake valve (5.1), and **in that** the rotating armature (32) of the rotational angle sensor (11.1) is fastened on the control shaft (10').

3. Vehicle having a vehicle frame and having a vehicle axle which is fastened thereto and having a load-dependent brake valve (5.2) which is designed to output a brake pressure which is dependent on an axle load of a vehicle (1), wherein said brake valve (5.2) has a sensor (11.2) for electronic detection of an axle load of the vehicle (1), wherein the sensor (11.2) is designed as an inductively operating sensor, wherein the sensor (11) is designed as an inductive travel sensor (11.2) by means of which the compression travel (Δz_{A}) of a vehicle axle (2) in relation to a vehicle frame (4) is able to be detected mechanically and is able to be converted into an electronic measurement signal, wherein the travel sensor (11.2) consists of a coil (38), arranged in a housing (9) of the brake valve (5.2), and a plunger-type armature (39), wherein the plunger-type armature (39) consists of a soft magnetic material, wherein the plunger-type armature (39) is arranged so as to be axially displaceable and coaxial over a longitudinal axis (42) of the housing (9), and wherein a control shaft (10") connected to the plunger-type armature (39) of the travel sensor (11.2) via a slide guide (20, 21, 22) and mounted rotatably in the housing (9) is connected to the vehicle axle (2) via an articulated linkage (6), wherein the travel sensor (11.2) is fastened to the vehicle frame (4) of the motor vehicle (1) so as to be axially parallel and horizontally spaced apart with respect to the vehicle axle (2).

4. Vehicle according to Claim 3, **characterized in that** the travel sensor (11.2) is integrated into the housing (9) of the brake valve (5.2), in which the control shaft (10") is rotatably mounted, said control shaft being connected via the slide guide (20, 21, 22) to a control bar (19') which is axially displaceable in the housing (9), **in that** the brake valve (5.2), with respect to the control shaft (10"), is fastened to the vehicle frame (4) of the vehicle (1) so as to be axially parallel and horizontally spaced apart with respect to the vehicle axle (2), **in that** the control shaft (10") is connected to the vehicle axle (6) via the articulated linkage (6), **in that** coil (38) of the travel sensor (11.2) is arranged so as to be coaxial over the control bar (19') in the housing (9) of the brake valve (5.1), and **in that** the plunger-type armature (39) of the travel sensor (11.2) is fastened on the control bar (19').

## Revendications

1. Véhicule comprenant un châssis de véhicule et un essieu de véhicule fixé à celui-ci et comprenant une vanne de frein (5.1) dépendante de la charge, laquelle est configurée pour délivrer une pression de freinage dépendante d'une charge d'essieu d'un véhicule (1), cette vanne de frein (5.1) possédant un capteur (11.1) destiné à détecter électroniquement une charge d'essieu du véhicule (1), le capteur (11.1) étant réalisé sous la forme d'un capteur à fonctionnement inductif, le capteur (11.1) étant réalisé sous la forme d'un capteur d'angle de rotation (11.1) inductif au moyen duquel le débattement de ressort (Δz_{A}) d'un essieu de véhicule (2) par rapport à un châssis de véhicule (4) peut être détecté mécaniquement et peut être converti en un signal de mesure électronique, le capteur d'angle de rotation (11.1) se composant d'une bobine (31) disposée dans un boîtier (9) de la vanne de frein (5.1) et d'un induit rotatif (32), l'induit rotatif (32) étant constitué d'un matériau magnétique doux, l'induit rotatif (32) étant disposé rotatif et de manière coaxiale par rapport à un axe longitudinal (42) du boîtier (9), et un arbre de commande (10') relié à l'induit rotatif (32) du capteur d'angle de rotation (11.1) se trouvant en liaison avec l'essieu de véhicule (2) par le biais d'une tringlerie articulée (6), le capteur d'angle de rotation (11.1) étant fixé au châssis de véhicule (4) du véhicule (1) de manière parallèle à l'axe et espacé horizontalement de l'essieu de véhicule (2).

2. Véhicule selon la revendication 1, **caractérisé en ce que** le capteur d'angle de rotation (11.1) est intégré dans le boîtier (9) de la vanne de frein (5.1) conjointement avec l'arbre de commande (10') qui y est monté à rotation, **en ce que** la vanne de frein (5.1) est fixée au châssis de véhicule (4) du véhicule (1) de manière parallèle à l'axe par rapport à l'arbre de commande (10') et espacée horizontalement de l'essieu de véhicule (2), **en ce que** l'arbre de commande (10') se trouve en liaison avec l'essieu de véhicule (2) par le biais de la tringlerie articulée (6), **en ce que** la bobine (31) du capteur d'angle de rotation (11.1) est disposée de manière coaxiale par rapport à l'arbre de commande (10') dans le boîtier (9) de la vanne de frein (5.1), et **en ce que** l'induit rotatif (32) du capteur d'angle de rotation (11.1) est fixé sur l'arbre de commande (10').

3. Véhicule comprenant un châssis de véhicule et un essieu de véhicule fixé à celui-ci et comprenant une vanne de frein (5.2) dépendante de la charge, laquelle est configurée pour délivrer une pression de freinage dépendante d'une charge d'essieu d'un véhicule (1), cette vanne de frein (5.2) possédant un capteur (11.2) destiné à détecter électroniquement une charge d'essieu du véhicule (1), le capteur (11.2) étant réalisé sous la forme d'un capteur à fonctionnement inductif, le capteur (11) étant réalisé sous la forme d'un capteur de course inductif (11.2) au moyen duquel le débattement de ressort (Δz_{A}) d'un essieu de véhicule (2) par rapport à un châssis de véhicule (4) peut être détecté mécaniquement et peut être converti en un signal de mesure électronique, le capteur de course (11.2) se composant d'une bobine (38) disposée dans un boîtier (9) de la vanne de frein (5.2) et d'un noyau plongeur (39), le noyau plongeur (39) étant constitué d'un matériau magnétique doux, le noyau plongeur (39) pouvant coulisser axialement et étant disposé de manière coaxiale par rapport à un axe longitudinal (42) du boîtier (9), et un arbre de commande (10") relié au noyau plongeur (39) du capteur de course (11.2) par le biais d'un guide de coulisse (20, 21, 22) et monté à rotation dans le boîtier (9) se trouvant en liaison avec l'essieu de véhicule (2) par le biais d'une tringlerie articulée (6), le capteur de course (11.2) étant fixé au châssis de véhicule (4) du véhicule (1) de manière parallèle à l'axe et espacé horizontalement de l'essieu de véhicule (2).

4. Véhicule selon la revendication 3, **caractérisé en ce que** le capteur de course (11.2) est intégré dans le boîtier (9) de la vanne de frein (5.2) dans lequel l'arbre de commande (10") est monté à rotation, lequel est relié par le biais du guide de coulisse (20, 21, 22) à une tige de commande (19') coulissante dans le sens axial dans le boîtier (9), **en ce que** la vanne de frein (5.2) est fixée au châssis de véhicule (4) du véhicule (1) de manière parallèle à l'axe par rapport à l'arbre de commande (10") et espacée horizontalement de l'essieu de véhicule (2), **en ce que** l'arbre de commande (10") se trouve en liaison avec l'essieu de véhicule (6) par le biais de la tringlerie articulée (6), **en ce que** la bobine (38) du capteur de course (11.2) est disposée de manière coaxiale par rapport à la tige de commande (19') dans le boîtier (9) de la vanne de frein (5.2), et **en ce que** le noyau plongeant (39) du capteur de course (11.2) est fixé sur la tige de commande (19').
